(19) Europäisches Patentamt
European Patent Office
Office européen des brevets

(11) **EP 3 702 238 B1**

(12) **EUROPEAN PATENT SPECIFICATION**

(45) Date of publication and mention
of the grant of the patent:
**13.10.2021 Bulletin 2021/41**

(51) Int Cl.:
*G06N 5/00* *(2006.01)*         *G06N 7/00* *(2006.01)*
*G06N 20/20* *(2019.01)*        *B61L 27/00* *(2006.01)*
*B61L 5/02* *(2006.01)*         *G06F 17/14* *(2006.01)*

(21) Application number: **20157277.3**

(22) Date of filing: **13.02.2020**

(54) **DIAGNOSTIC SYSTEM AND A METHOD OF DIAGNOSING FAULTS**

DIAGNOSESYSTEM UND VERFAHREN ZUR FEHLERDIAGNOSE

SYSTÈME DE DIAGNOSTIC ET PROCÉDÉ DE DIAGNOSTIC DE DÉFAUTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2019 GB 201902157**

(43) Date of publication of application:
**02.09.2020 Bulletin 2020/36**

(73) Proprietor: **Thales Holdings UK Plc
Reading, Berkshire RG2 6GF (GB)**

(72) Inventors:
• **NEWMAN, Michael
Reading, Berkshire RG2 0SB (GB)**
• **TICKEM, David
London, E1W 1YW (GB)**
• **SHAYLER, Daniel
Reading, Berkshire RG2 0SB (GB)**

(74) Representative: **Grant, David Michael
Marks & Clerk LLP
15 Fetter Lane
London EC4A 1BW (GB)**

(56) References cited:
**WO-A1-2019/012726     CN-A- 105 787 511**

• **MUFTI M ET AL: "AUTOMATED FAULT
DETECTION AND IDENTIFICATION USING A
FUZZY-WAVELET ANALYSIS TECHNIQUE",
CONFERENCE RECORD AUTOTESTCON '95.
ATLANTA, AUG. 8 - 10, 1995; [PROCEEDINGS OF
THE SYSTEMS READINESS TECHNOLOGY
CONFERENCE (AUTOTESTCON)], NEW YORK,
IEEE, US, vol. 31, 8 August 1995 (1995-08-08),
pages 169-175, XP000555102, ISBN:
978-0-7803-2622-4**

EP 3 702 238 B1

## Description

### Technical Field

The present invention relates to a diagnostic system for diagnosing faults in a railway point switch, a training module for a diagnosing system for diagnosing faults in a railway point switch, a method for diagnosing faults in a railway point switch, and a method for constructing a plurality of feature sets for classifying operating behaviour of a railway point switch.

The operating behaviour being diagnosed may relate to normal operation or one or more fault types.

### Background

Railway point switches operate by swinging between different lines depending on the direction in which a train is headed. Condition monitoring may be employed to monitor operating behaviour of the point switch, in-use. Conventional condition monitoring typically monitors the behaviour of an electric motor when operating the point switch. For example, average current drawn from an electric motor may be monitored and, when the average current during a swing increases beyond a threshold value, an alarm or warning is sent to a maintenance terminal to advise that the point switch requires investigation to determine if there is a fault.

Such monitoring means are not reliable at detecting all fault types, for instance faults exhibiting oscillations about a set value, which fault types would not necessarily fall below a threshold value. Also, such means of fault detection require an operator ultimately to assess the waveform in order to diagnose the fault, and so require manual investigation depending on the knowledge and experience of the operator.

Document CN 105 787 511 A discloses switch breakdown diagnostic method based on support vector machine.

Accordingly, there is a need to provide improved condition monitoring.

### Summary

The present invention is defined by the features of the independent claims.

It is provided a diagnostic system for diagnosing faults in a railway point switch as defined by the features of claim 1. The diagnostic system comprises: an input arranged to receive a waveform associated with operating the railway point switch during an event; a feature extraction module arranged to extract characteristic features representing a shape of the waveform; and a classification module arranged to apply the extracted characteristic features to logic rules for classifying the features according to an operating behaviour of the railway point switch during the event, classify the operating behaviour of the railway point switch based on the application of the extracted features to the logic rules, and generate a signal indicating the classified operating behaviour.

By extracting characteristic features representing a shape of the waveform, more detail is provided than merely obtaining an average current value. In this way, the shape of the waveform enables classification of the operating behaviour, for example, normal operation or a fault type, to be diagnosed when classifying the waveform. Accordingly, an automatic classification system is provided which obviates the need for manual investigation of the behaviour of a point switch by a trained operator.

The characteristic features may be extracted using wavelet approximation. The wavelet approximation is beneficial compared to other reduction techniques since it retains the time resolution of the waveform so that the shape of the wave is maintained. The classification module includes a supervised machine learning algorithm for generating the logic rules for classifying the operating behaviour of the railway point switch.

The supervised machine learning algorithm comprises a Random Forrest. Use of the Random Forrest reduces overfitting of the data and improves classification accuracy compared to other methods.

Classifying the operating behaviour of the railway point switch may include selecting subsets of features from the extracted features, generating probabilities that the subsets of the extracted features correspond to each of the feature sets, and identifying a most likely operating behaviour based on the generated probabilities.

The event may be a swing of the point switch.

The waveform may represent current drawn during the event versus a time duration of the event. Monitoring current is beneficial since it requires unobtrusive sensors to measure the current, which sensors do not interfere with operating the point switch. The extracted characteristic features may include average current for each period. The waveform may be received in real-time.

It is provided a training module for a diagnostic system, the diagnostic system for diagnosing faults in a railway point switch as defined by the features of claim 6. The training module comprises: an input arranged to receive a plurality of waveforms, each waveform associated with an operating behaviour of the railway point switch during an event; a feature extraction module arranged to extract characteristic features representing a shape of the waveforms; and a construction module arranged to construct a plurality of feature sets based on the characteristic features extracted from the waveforms, each feature set corresponding to an operating behaviour of the railway point switch.

The features may be extracted using periodic time series data extraction.

The feature sets form part of a supervised machine learning algorithm.

The supervised machine learning algorithm comprises a Random Forrest.

The features sets may form trees of the Random Forrest.

The construction module may construct the feature sets by comparing extracted characteristic features between the plurality of waveforms, and disregard substantially identical features.

The waveform may represent historical, in-service operating behaviour of the railway point switch. It is beneficial to utilise historical in-service waveforms since they will more accurately represent the in-service fault detection waveforms than other waveform types, for example waveforms constructed by industry experts or by simulators. The waveforms provided by in-service may also have a higher degree of representative variation due to other factors such as environmental changes. The degree to which environment effects the equipment is difficult to measure through simulation.

The feature extraction module may be arranged to normalise the waveforms prior to extracting the features. In this way, seasonal variations affecting the waveforms may be negated.

The foregoing diagnostic system may include the foregoing training module.

It is provided a method of diagnosing faults in a railway point switch as defined by the features of claim 11. The method comprises: receiving a waveform associated with operating the railway point switch during an event; extracting characteristic features from the waveform, the characteristic features representing a shape of the waveform; applying the extracted characteristic features to logic rules for classifying the features according to an operating behaviour of the railway point switch during the event; classifying the operating behaviour of the railway point switch based on the application of the extracted characteristic features to the logic rules; and generating a signal indicating the classified operating behaviour.

It is provided a method of constructing a plurality of feature sets for classifying operating behaviour of a railway point switch as defined by the features of claim 12. The method comprises: receiving a plurality of waveforms, each waveform associated with an operating behaviour of the railway point switch; extracting characteristic features from the waveforms, the characteristic features representing a shape of the waveform; and constructing a plurality of feature sets based on the characteristic features extracted from the waveforms, each feature set corresponding to an operating behaviour of the railway point switch; and generating logic rules for each feature set for classifying a real-time waveform.

## Brief Description of the Figures

Aspects and embodiments of the disclosed subject-matter are best described with reference to the accompanying figures, of which:

- Figure 1 shows a railway point switch;
- Figures 2a and 2b show traces associated with operation of the railway point switch from Figure 1;
- Figure 3 shows a block diagram of a diagnostic system according to an embodiment;
- Figure 4 shows a schematic representing a wavelet reduction method for extracting features from waveforms using the diagnostic system from Figure 3;
- Figure 5 shows a schematic representation of subdivisions of a waveform obtained by the wavelet reduction method from Figure 4;
- Figure 6 shows a graph of a waveform and an corresponding waveform approximation obtained using the wavelet reduction method;
- Figure 7 shows a similar view to Figure 6 of two further waveform approximations obtained using the wavelet reduction method;
- Figure 8 shows a flow chart of operating a training module shown in Figure 3; and
- Figure 9 shows a flow chart of operating the diagnostic system from Figure 3.

## Detailed Description of the Embodiments

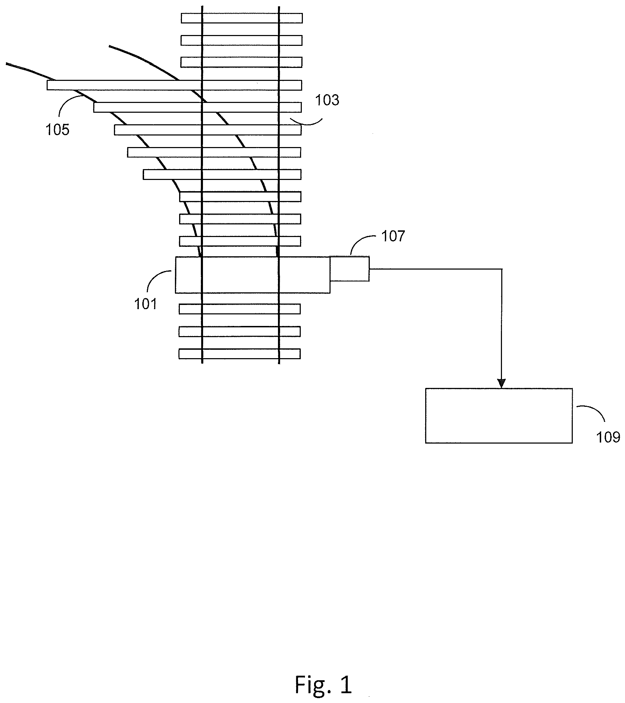

Figure 1 shows a schematic of a railway switch 101 used to guide a train from a first track 103 to a second track 105 and a processor 109 for executing operating instructions to operate the railway switch 101, in accordance with some embodiments of the present disclosure.

The railway switch 101 is one example of an electromechanical system in the railway infrastructure and is driven by an electric motor 107. When activated, the railway switch 101 moves switch blades (not shown) between the first track 103 and the second track 105 slightly, such that a train approaching the intersection between the first track 103 and the second track 105 is diverted onto the second track 105.

The railway switch 101 comprises the electric motor 107 and a gear-mechanism (not shown). The electric motor 107 transforms electrical energy into mechanical energy and generates a rotational motion that is used to move the switch blades between the first track 103 and the second track 105. The gear mechanism may reduce the angular velocity of the motor and amplify the torque applied by the motor to the switch blades. In addition, it may transform the rotational motion into a translational motion. The switch blade mechanism includes springs and dampers configured to control the motion of the switch blades between the first track 103 and the second track 105. Furthermore, a lock pin or the like may be used to connect the electric motor 107 via a drive rod with the switch blades.

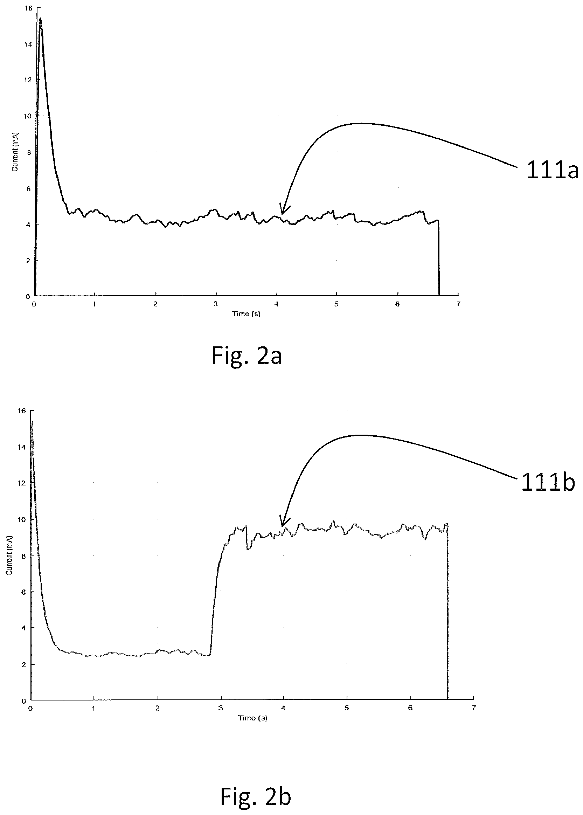

In embodiments of the present disclosure, measurements of the electrical usage of the electric motor 107 are made each time the railway switch 101 is operated to switch the points, i.e., move the switch blades. The measurement may be carried out by measuring one of several electrical usage parameters; these parameters may include, for example, the current being drawn by the motor, the voltage drop across the machine, or the power transferred by the machine. Measurements may be made using a suitable meter (current meter, voltmeter, power meter etc.) In the example shown, the measurement is carried out by measuring current drawn by the electric motor during the operation. In some embodiments, the measurement(s) is output in the form of a signal trace or the like to an operating processor 109. The operating processor 109 may be located proximal to the railway switch 101 or be in a remote location. The processor may use periodic time series extraction to generate individual traces 111a, 111b (Figure 2) from the measured electrical parameter.

With reference to Figures 2a and 2b, the signal trace may comprise a trace 111a, 111b showing change in the electrical usage parameter associated with the electric motor 107 with time during operation of the railway switch 101. The electrical parameter used in the traces 111a, 111b, shown in Figures 2a and 2b, is the electrical current drawn when operating the point switch 101 during an event, for instance a swing event. In particular, the two traces 111, 111b are traces relating to two different fault types when the railway point switch 101 is operating erroneously.

In the first trace 111a, relating to the first fault type, the drawn current is seen to overshoot and then quickly decay and oscillate unevenly about a set-point value. The peak in current may be described as a load impulse. In the second trace 111b, relating to the second fault type, the load impulse quickly decays and the current oscillates unevenly about a first set-point value, before rising again to oscillate unevenly about a second set-point value. Both traces 111a, 111b end abruptly when the current suddenly decays to zero amps.

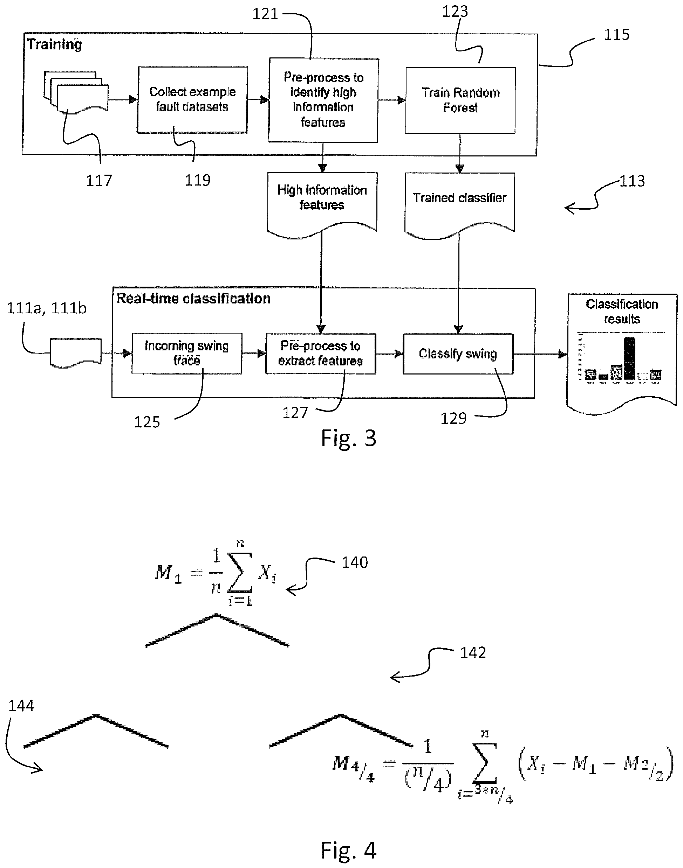

With reference to Figure 3, the processor 109 (see Figure 1) is used to diagnose the fault types associated with each waveform in the first and second traces 111a, 111b. In particular, a diagnostic system 113 is stored on a memory (not shown) and is executed by the processor 109. The diagnostic system 113 includes a training module 115 stored as electronic data in the memory. The training module 115 includes an input 119, a feature extraction module 121, and a construction module 123. The processor 109 may be located at trackside or remotely. In the event of the remotely located processor 109, data is sent wirelessly, for instance by Global Systems for Mobile communications (GSM), at which point the waveform may be applied to the classifier.

The input 119 received a plurality of traces 117 representing historical in-service waveforms similar to those shown in Figures 2a and 2b. Alternatively, simulated or manually constructed waveforms may be used, but historical in-service waveforms are preferred since they represent the point switch in a non-ideal environment and are more comparable to the in-service waveforms such as those shown in Figures 2a and 2b.

The traces 117 may be obtained by performing periodic time series data extraction on a stream of data from the railway switch 101 (Figure 1).

The feature extraction module 121 first normalises the waveforms 117 to remove any seasonal variations due to weather changes, for example. Next, the feature extraction module 121 performs pre-processing on the waveforms 117 to prepare the waveforms for classification.

With reference to Figure 4, a trace may be pre-processed by wavelet approximation. Wavelet approximation, unlike many other possible transforms, is advantageous as it retains its time resolution and so the shape of the wave is maintained. Once reduced, the resulting waveform may be considered as an approximation of the original waveform. The approximation includes a plurality of time divisions, each including a mean value (as described below). The mean values in the time divisions may be used to obtain the characteristic features.

The wavelet approximation reduces the wave to a number of residual mean values using the following formula:

$$M_1 = \frac{1}{n}\sum_{i=1} X_i \qquad (1)$$

In formula (1), M is the mean value, n is the number of values in a section, and X is the numerical value.

With reference to Figure 4, the full wave may be taken as a first "section", shown at a first level 140 of division. Formula (1) above is used to determine a mean for this first "section".

The wave is then divided into a number of sections at a lower level, in this case the second level 142. The maximum number of subdivisions is equal to $2^n$ in order for the wave to be represented uniformly, and this will produce $(2^{n+1}-1)$ wavelet components.

According to Figure 4, the second level 142 has two "sections" into which the wave is divided. The divisions may be equal in time duration, such that the wave is divided into a first half and a second half each having equal time duration of half of the total time of the wave.

Figure 4 shows three levels resulting in four sections into which the wave has been divided. The fourth section in the third level 144 shows formula (2), which is:

$$M_{4/4} = \frac{1}{\left(n/4\right)} \sum_{i=3*n/4}^{n} \left( X_i - M_1 - M_{2/2} \right)$$

$$(2)$$

As can be seen from formula (2), a value in a lower level section is taken and the mean value, M, of a higher level section is subtracted from it. In this way, the mean value for the lower level section is determined using all values in that section. For instance, $M_1$ is the mean of the entire wave, $M_{1/2}$ and $M_{2/2}$ are then the mean values of the first and second halves of the wave after the mean has been subtracted, and so on. This process can be repeated until either there are a certain maximum number of subdivisions or until there are a maximum number of wavelet components.

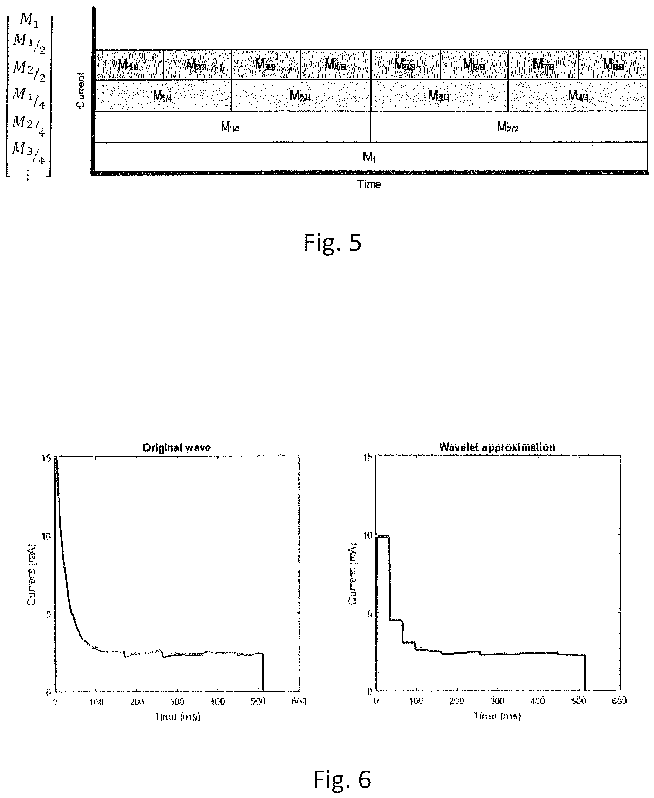

With reference to Figure 5, the maximum number of subdivisions is eight, and the maximum number of wavelet components is fifteen.

With reference to Figure 6, an original trace can be approximated using the wavelet described above using a maximum number of subdivisions of 16 wavelets. The original waveform is shown on the left of Figure 6 and the approximation is shown on the right of Figure 6. It can be seen from Figure 6 that the wavelet approximation follows the shape of the original trace whilst removing some of the resolution in current (mA) readings.

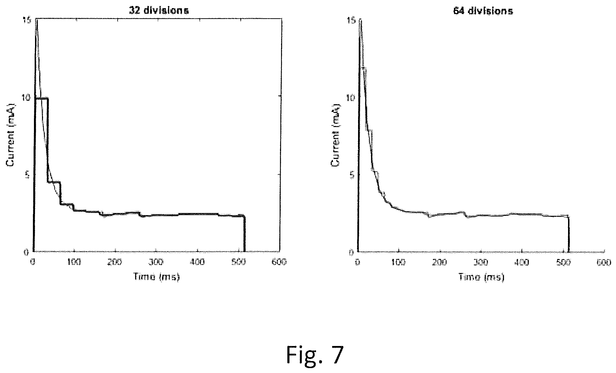

Figure 7 shows two examples of wavelets with a different number of maximum subdivisions. Two primary effects can be seen as the number of sub-divisions used decreases. Firstly, the variation of the approximation from the original waveform increases, representing the removal of information when forming the wavelet. The second is that any high frequency changes (as can be seen at -180 and -270 in the example) are not well represented by the wavelet approximation. Sudden changes such as these do not represent significant characteristics for the majority of the fault symptoms that would have been selected for classification. However, this is not true in the case of certain fault types, for instance "motor brush wear" fault symptom as this has high frequency oscillations as a principal property for its identification.

The construction module 123 uses the features to construct a plurality of feature sets each representing a fault type and then trains a supervised machine learning algorithm to classify the fault type associated with the trace. The supervised machine learning algorithm may be a Random Forrest. The feature sets are constructed by comparing the features from the plurality of traces 117 and identifying distinguishing features from among the features of the traces. The distinguishing features may be identified by comparing features between traces 117 and disregarding substantially identical features.

During training, the construction module 123 looks at all values that are generated by the Random Forrest for a particular feature. The construction module 123 then generates logic rules to classify. The logic rules classify a fault according to how the feature of a real-time trace compares to the number from the logic rule.

The feature sets for each fault type, or operating behaviour of the railway point switch 101, are then used to form the trees of the Random Forrest.

Still with reference to Figure 3, the diagnostic system 113 may include an input 125, a feature extraction module 127, and a classification module 129.

The input 125 receives the traces 111a, 111b. The feature extraction module 127 uses the same pre-processing as described above for the training module 115, and so duplicated description will be omitted. Once features have been extracted from a real-time trace 111a, 111b, those features are classified using the logic rule from the training phase. For instance, if the logic rule has a value of 10.16, the feature of the incoming trace 111a, 111b may be classified as a fault of class 1, 4, or 5, out of 6 potential feature classes, if the feature value from the trace 111a, 111b is higher than 10.16. Similarly, the feature of the incoming trace 111a, 111b may be classified as a fault of class 2, 3, or 6, out of 6 potential feature classes, if the feature value from the trace 111a, 111b, is lower than 10.16.

Each tree in the Random Forrest provides a decision about which operating behaviour it believes is occurring. For example, the first tree may explain that it is operating normally, and would provide no other information regarding the probabilities of other faults. The decision of all the individual trees is then counted up, and thus the overall probability is obtained.

By way of an illustrative example, if there are ten trees, and three of those ten trees predicted that the point switch was operating normally, three predicted fault A, and 4 predicted fault B. In this case, the overall probabilities given from the classifier would be 30% Normal, 30% fault A, and 40% fault B.

It should be noted that the operating behaviours relating to the feature sets are not necessarily representative of fault types, since they could also represent the point switch 101 operating normally.

Once the trace 111a, 111b has been classified according to an operating behaviour, a signal is generated that can be sent to an operator terminal (not shown) for retrieval by an operator to investigate. The signal may include a message detailing metadata associated with the fault, such as time and date of the event, and a classification label including a description of the classification that is suspected. Probabilities of each of the classes alongside the overall classification label may also be provided.

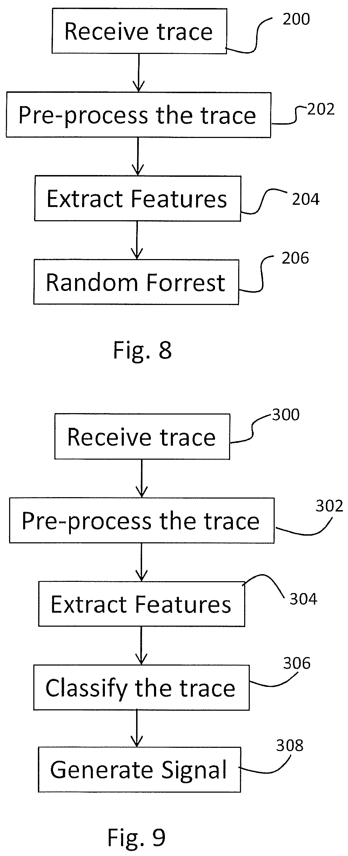

With reference to Figure 8, operation of the training module may be described in terms of a method. Firstly, a plurality of traces 117 is received at step 200. The traces 117 may be pre-processed at step 202. Pre-processing firstly normalises the traces 117. Forrest. In one embodiment, the extracted features are classified using the Random Forrest which applies a value of a feature to the logic rules created during the training phase to generate a likelihood that the trace 111a, 111b is associated with an operating behaviour represented by each feature set. Subsequently, the classification of the operating behaviour is estimated based on the probabilities. Once the trace 111a, 111b has been classified, a signal is generated at step 308 indicating the operating behaviour of the railway point switch. The signal may be sent to an operator terminal to describe operating behaviour to an operator to aid fault diagnosis. In this way, there is reduced burden on the operator since a fault may be diagnosed more accurately and quickly and without input from an expert, as would usually be the case. In addition, a greater proportion of true positive alarms may be provided so that operators' time can be more efficiently used. Drawbacks associated with conventional systems include a high proportion of false alarms which produce a burden on the operators as they have to spend time investigating alarms that are not indicative of actual faults.

## Claims

1. A diagnostic system (113) for diagnosing faults in a railway point switch (101), the diagnostic system (113) comprising:

   an input arranged to receive a waveform (117) associated with operating the railway point switch (101) during an event;
   a feature extraction module (121) arranged to extract characteristic features representing a shape of the waveform (117); and
   a classification module (129) arranged to apply the extracted characteristic features to logic rules for classifying the features according to an operating behaviour of the railway point switch (101) during the event, classify the operating behaviour of the railway point switch (101) based on the application of the extracted characteristic features to the logic rules, and generate a signal indicating the classified operating behaviour, **characterized in that** the classification module (129) includes a supervised machine learning algorithm for generating the logic rules for classifying the operating behaviour of the railway point switch (101), wherein the supervised machine learning algorithm comprises a Random Forrest.

2. The diagnostic system (113) of Claim 1, wherein the characteristic features are extracted using wavelet approximation.

3. The diagnostic system (113) of Claim 1, wherein classifying the operating behaviour of the railway point switch (101) includes selecting subsets of features from the extracted features, generating probabilities that the subsets of the extracted features correspond to each of the feature sets, and identifying a most likely operating behaviour based on the generated probabilities, and optionally wherein the event is a swing of the point switch (101).

4. The diagnostic system (113) of any preceding claim, wherein the waveform (117) represents current drawn during the event versus a time duration of the event, and/or wherein the waveform (117) is received in real-time.

5. The diagnostic system (113) of Claim 4 wherein the extracted characteristic features include average current for each period.

6. A training module (115) for a diagnostic system (113), the diagnostic system (113) for diagnosing faults in a railway point switch (101), the training module (115) comprising:

   an input (125) arranged to receive a plurality of waveforms (117), each waveform (117) associated with an operating behaviour of the railway point switch (101) during an event;
a feature extraction module (121) arranged to extract characteristic features representing a shape of the waveforms (117); and
a construction module (123) arranged to construct a plurality of feature sets based on the characteristic features extracted from the waveforms (117), each feature set corresponding to an operating behaviour of the railway point switch (101), **characterized in that** the feature sets form part of a supervised machine learning algorithm, wherein the supervised machine learning algorithm comprises a Random Forrest.

7. The training module (115) of Claim 6, wherein the features are extracted using wavelet approximation.

8. The training module (115) of Claim 6, wherein the features sets form trees of the Random Forrest, and optionally wherein the construction module (123) constructs the feature sets by comparing extracted characteristic features between the plurality of waveforms (117), and disregarding substantially identical features.

9. The training module (115) of any one of Claims 6 to 8, wherein the waveform (117) represents historical, in-service operating behaviour of the railway point switch (101), wherein the feature extraction module (121) is arranged to normalise the waveforms (117) prior to extracting the features.

10. The diagnostic system (113) of any of Claims 1 to 5 comprising the training module (115) of any of Claims 6 to 9.

11. A method of diagnosing faults in a railway point switch (101), the method comprising:

receiving a waveform associated with operating the railway point switch (101) during an event;
extracting characteristic features from the waveform (117), the characteristic features representing a shape of the waveform (117);
applying the extracted characteristic features to logic rules for classifying the features according to an operating behaviour of the railway point switch (101) during the event;
classifying the operating behaviour of the railway point switch (101) based on the application of the extracted characteristic features to the logic rules; and
generating a signal indicating the classified operating behaviour of the railway point switch (101), **characterized in that** the method further comprises generating the logic rules using a supervised machine learning algorithm for classifying the operating behaviour of the railway point switch (101), wherein the supervised machine learning algorithm comprises a Random Forrest.

12. A method of constructing a plurality of feature sets for classifying operating behaviour of a railway point switch (101), the method comprising:

receiving a plurality of waveforms (117), each waveform (117) associated with an operating behaviour of the railway point switch (101);
extracting characteristic features from the waveforms (117), the characteristic features representing a shape of the waveform (117); and
constructing a plurality of feature sets based on the characteristic features extracted from the waveforms (117), each feature set corresponding to an operating behaviour of the railway point switch (101), and
generating logic rules for each feature set for classifying a real-time waveform,
**characterized in that** the feature sets form part of a supervised machine learning algorithm, wherein the supervised machine learning algorithm comprises a Random Forrest.

**Patentansprüche**

1. Diagnosesystem (113) zur Fehlerdiagnose in einer Eisenbahnweiche (101), wobei das Diagnosesystem (113) Folgendes umfasst:

einen Eingang, welcher geeignet ist, eine Wellenform (117) zu empfangen, welche dem Betrieb der Eisenbahnweiche (101) während eines Ereignisses zugeordnet ist;
ein Merkmal-Extraktionsmodul (121), welches geeignet ist, charakteristische Merkmale zu extrahieren, welche eine Form der Wellenform (117) darstellen; und
ein Klassifizierungsmodul (129), welches geeignet ist, die extrahierten charakteristischen Merkmale auf logische Regeln zum Klassifizieren der Merkmale gemäß einem Betriebsverhalten der Eisenbahnweiche (101) während des Ereignisses anzuwenden, das Betriebsverhalten der Eisenbahnweiche (101), basierend auf der Anwendung der extrahierten charakteristischen Merkmale auf die logischen Regeln, zu klassifizieren, und ein Signal zu erzeugen, welches das klassifizierte Betriebsverhalten angibt, **dadurch gekennzeichnet, dass** das Klassifizierungsmodul (129) einen überwachten Maschinenlemalgorithmus zum Erzeugen der logischen Regeln zur Klassifizierung des Betriebsverhaltens der Eisenbahnweiche (101) einschließt,
wobei der überwachte Maschinenlemalgorithmus einen Random Forest umfasst.

2. Diagnosesystem (113) nach Anspruch 1, wobei die charakteristischen Merkmale unter Verwendung einer Wavelet-Annäherung extrahiert werden.

3. Diagnosesystem (113) nach Anspruch 1, wobei das Klassifizieren des Betriebsverhaltens der Eisenbahnweiche (101) das Auswählen von Teilgruppen von Merkmalen aus den extrahierten Merkmalen, das Erzeugen von Wahrscheinlichkeiten, dass die Teilgruppen der extrahierten Merkmale jeder der Merkmalgruppen entsprechen, und das Identifizieren eines wahrscheinlichsten Betriebsverhaltens, basierend auf den erzeugten Wahrscheinlichkeiten, einschließt, und wobei optionsweise das Ereignis eine Schwenkbewegung der Weiche (101) ist.

4. Diagnosesystem (113) nach einem der vorhergehenden Ansprüche, wobei die Wellenform (117) einen während des Ereignisses gezogenen Strom im Vergleich zu einer Zeitdauer des Ereignisses darstellt, und/oder wobei die Wellenform (1 17) in Echtzeit empfangen wird.

5. Diagnosesystem (113) nach Anspruch 4, wobei die extrahierten charakteristischen Merkmale einen mittleren Strom für jeden Zeitraum einschließen.

6. Trainingsmodul (115) für ein Diagnosesystem (113), wobei das Diagnosesystem zur Fehlerdiagnose in einer Eisenbahnweiche (101) bestimmt ist, wobei das Trainingsmodul (115) Folgendes umfasst:

einen Eingang (125), welche geeignet ist, eine Wellenform (117) zu empfangen, wobei jede Wellenform (117) einem Betriebsverhalten der Eisenbahnweiche (101) während eines Ereignisses zugeordnet ist;
ein Merkmal-Extraktionsmodul (121), welches geeignet ist, charakteristische Merkmale zu extrahieren, welche eine Form der Wellenformen (117) darstellen; und
ein Konstruktionsmodul (123), welches geeignet ist, eine Vielzahl von Merkmalgruppen basierend auf den aus den Wellenformen (117) extrahierten charakteristischen Merkmalen zu konstruieren, wobei jede Merkmalgruppe einem Betriebsverhalten der Eisenbahnweiche (101) entspricht,
**dadurch gekennzeichnet, dass** die Merkmalgruppen einen Bestandteil eines überwachten Maschinenlemalgorithmus bilden,
wobei der überwachte Maschinenlemalgorithmus einen Random Forest umfasst.

7. Trainingsmodul (115) nach Anspruch 6, wobei die Merkmale unter Verwendung einer Wavelet-Annäherung extrahiert werden.

8. Trainingsmodul (115) nach Anspruch 6, wobei die Merkmalgruppen Bäume des Random Forest bilden, und wobei optionsweise das Konstruktionsmodul (123) die Merkmalgruppen durch Vergleichen extrahierter charakteristischer Merkmale unter der Vielzahl von Wellenformen (117), und durch Ignorieren identischer Merkmale, konstruiert.

9. Trainingsmodul (115) nach einem der Ansprüche 6 bis 8, wobei die Wellenform (117) das historische Betriebsverhalten im Betrieb der Eisenbahnweiche (101) darstellt, wobei das Merkmal-Extraktionsmodul (121) geeignet ist, die Wellenformen (117) vor dem Extrahieren der Merkmale zu normalisieren.

10. Diagnosesystem (113) nach einem der Ansprüche 1 bis 5, umfassend das Trainingsmodul (115) nach einem der Ansprüche 6 bis 9.

11. Verfahren zur Fehlerdiagnose in einer Eisenbahnweiche (101), wobei das Verfahren Folgendes umfasst:

Empfangen einer Wellenform, welche dem Betrieb der Eisenbahnweiche (101) während eines Ereignisses zugeordnet ist;
Extrahieren charakteristischer Merkmale aus der Wellenform (117), wobei die charakteristischen Merkmale eine Form der Wellenform (117) darstellen;

Anwenden der extrahierten charakteristischen Merkmale auf logische Regeln zum Klassifizieren der Merkmale gemäß einem Betriebsverhalten der Eisenbahnweiche (101) während des Ereignisses;

Klassifizieren des Betriebsverhaltens der Eisenbahnweiche (101), basierend auf der Anwendung der extrahierten charakteristischen Merkmale, auf die logischen Regeln; und

Erzeugen eines Signals, welches das klassifizierte Betriebsverhalten der Eisenbahnweiche (101) angibt, **dadurch gekennzeichnet, dass** das Verfahren ferner das Erzeugen der logischen Regeln unter Verwendung eines überwachten Maschinenlernalgorithmus zum Klassifizieren des Betriebsverhaltens der Eisenbahnweiche (101) umfasst, wobei der überwachte Maschinenlernalgorithmus einen Random Forest umfasst.

**12.** Verfahren zum Konstruieren einer Vielzahl von Merkmalgruppen zum Klassifizieren des Betriebs einer Eisenbahnweiche (101), wobei das Verfahren Folgendes umfasst:

Empfangen einer Vielzahl von Wellenformen (117), wobei jede Wellenform (117) einem Betriebsverhalten der Eisenbahnweiche (101) zugeordnet ist;

Extrahieren charakteristischer Merkmale aus den Wellenformen (117), wobei die charakteristischen Merkmale eine Form der Wellenform (117) darstellen; und

Konstruieren einer Vielzahl von Merkmalgruppen, basierend auf den aus den Wellenformen (117) extrahierten charakteristischen Merkmalen, wobei jede Merkmalgruppe einem Betriebsverhalten der Eisenbahnweiche (101) entspricht; und

Erzeugen logischer Regeln für jede Merkmalgruppe zur Klassifizierung einer Echtzeit- Wellenform, **dadurch gekennzeichnet, dass** die Merkmalgruppen einen Bestandteil eines überwachten Maschinenlernalgorithmus bilden, wobei der überwachte Maschinenlernalgorithmus einen Random Forest umfasst.

## Revendications

**1.** Système de diagnostic (113) pour diagnostiquer des pannes dans un commutateur d'aiguillage (101), le système de diagnostic (113) comprenant :

une entrée qui est agencée pour recevoir une forme d'onde (117) qui est associée au fonctionnement du commutateur d'aiguillage (101) pendant un événement ;

un module d'extraction de caractéristiques (121) qui est agencé pour extraire des caractéristiques marquantes qui représentent une forme de la forme d'onde (117) ; et

un module de classification (129) qui est agencé pour appliquer les caractéristiques marquantes extraites à des règles logiques pour classifier les caractéristiques en fonction d'un comportement de fonctionnement du commutateur d'aiguillage (101) pendant l'événement, pour classifier le comportement de fonctionnement du commutateur d'aiguillage (101) sur la base de la soumission des caractéristiques marquantes extraites aux règles logiques et pour générer un signal qui indique le comportement de fonctionnement classifié ; **caractérisé en ce que** le module de classification (129) inclut un algorithme d'apprentissage automatique supervisé pour générer les règles logiques pour classifier le comportement de fonctionnement du commutateur d'aiguillage (101) ;

dans lequel l'algorithme d'apprentissage automatique supervisé comprend une forêt aléatoire.

**2.** Système de diagnostic (113) selon la revendication 1, dans lequel les caractéristiques marquantes sont extraites en utilisant une approximation par ondelette(s).

**3.** Système de diagnostic (113) selon la revendication 1, dans lequel la classification du comportement de fonctionnement du commutateur d'aiguillage (101) inclut la sélection de sous-jeux de caractéristiques parmi les caractéristiques extraites, la génération de probabilités que les sous-jeux des caractéristiques extraites correspondent à chacun des jeux de caractéristiques et l'identification d'un comportement de fonctionnement le plus vraisemblable sur la base des probabilités générées et en option, dans lequel l'événement est une oscillation du commutateur d'aiguillage (101).

**4.** Système de diagnostic (113) selon l'une quelconque des revendications précédentes, dans lequel la forme d'onde (117) représente un courant qui est tracé pendant l'événement en fonction d'une durée temporelle de l'événement et/ou dans lequel la forme d'onde (117) est reçue en temps réel.

**5.** Système de diagnostic (113) selon la revendication 4, dans lequel les caractéristiques marquantes extraites incluent un courant moyen pendant chaque période.

6. Module d'apprentissage (115) pour un système de diagnostic (113), le système de diagnostic (113) étant destiné à diagnostiquer des pannes dans un commutateur d'aiguillage (101), le module d'apprentissage (115) comprenant :

une entrée (125) qui est agencée pour recevoir une pluralité de formes d'onde (117), chaque forme d'onde (117) étant associée à un comportement de fonctionnement du commutateur d'aiguillage (101) pendant un événement ;
un module d'extraction de caractéristiques (121) qui est agencé pour extraire des caractéristiques marquantes qui représentent une forme de la forme d'onde (117) ; et
un module de construction (123) qui est agencé pour construire une pluralité de jeux de caractéristiques sur la base des caractéristiques marquantes qui sont extraites à partir des formes d'onde (117), chaque jeu de caractéristiques correspondant à un comportement de fonctionnement du commutateur d'aiguillage (101) ;
**caractérisé en ce que** les jeux de caractéristiques constituent une partie d'un algorithme d'apprentissage automatique supervisé ;
dans lequel l'algorithme d'apprentissage automatique supervisé comprend une forêt aléatoire.

7. Module d'apprentissage (115) selon la revendication 6, dans lequel les caractéristiques sont extraites en utilisant une approximation par ondelette(s).

8. Module d'apprentissage (115) selon la revendication 6, dans lequel les jeux de caractéristiques forment des arbres de la forêt aléatoire et en option, dans lequel le module de construction (123) construit les jeux de caractéristiques en comparant les caractéristiques marquantes extraites entre la pluralité de formes d'onde (117) et en écartant les caractéristiques sensiblement identiques.

9. Module d'apprentissage (115) selon l'une quelconque des revendications 6 à 8, dans lequel la forme d'onde (117) représente un comportement historique de fonctionnement en service du commutateur d'aiguillage (101), dans lequel le module d'extraction de caractéristiques (121) est agencé pour normaliser les formes d'onde (117) avant l'extraction des caractéristiques.

10. Système de diagnostic (113) selon l'une quelconque des revendications 1 à 5, comprenant le module d'apprentissage (115) selon l'une quelconque des revendications 6 à 9.

11. Procédé de diagnostic de pannes dans un commutateur d'aiguillage (101), le procédé comprenant :

la réception d'une forme d'onde qui est associée au fonctionnement du commutateur d'aiguillage (101) pendant un événement ;
l'extraction de caractéristiques marquantes à partir de la forme d'onde (117), les caractéristiques marquantes représentant une forme de la forme d'onde (117) ;
l'application des caractéristiques marquantes extraites à des règles logiques pour classifier les caractéristiques en fonction d'un comportement de fonctionnement du commutateur d'aiguillage (101) pendant l'événement ;
la classification du comportement de fonctionnement du commutateur d'aiguillage (101) sur la base de l'application des caractéristiques marquantes extraites aux règles logiques ; et
la génération d'un signal qui indique le comportement de fonctionnement classifié du commutateur d'aiguillage (101) ;
**caractérisé en ce que** le procédé comprend en outre la génération des règles logiques en utilisant un algorithme d'apprentissage automatique supervisé pour la classification du comportement de fonctionnement du commutateur d'aiguillage (101) ;
dans lequel l'algorithme d'apprentissage automatique supervisé comprend une forêt aléatoire.

12. Procédé de construction d'une pluralité de jeux de caractéristiques pour classifier le comportement de fonctionnement d'un commutateur d'aiguillage (101), le procédé comprenant :

la réception d'une pluralité de formes d'onde (117), chaque forme d'onde (117) étant associée à un comportement de fonctionnement du commutateur d'aiguillage (101) ;
l'extraction de caractéristiques marquantes à partir des formes d'onde (117), les caractéristiques marquantes représentant une forme de la forme d'onde (117) ; et
la construction d'une pluralité de jeux de caractéristiques sur la base des caractéristiques marquantes qui sont extraites à partir des formes d'onde (117), chaque jeu de caractéristiques correspondant à un comportement de fonctionnement du commutateur d'aiguillage (101) ; et

la génération de règles logiques pour chaque jeu de caractéristiques pour classifier une forme d'onde en temps réel ;

**caractérisé en ce que** les jeux de caractéristiques constituent une partie d'un algorithme d'apprentissage automatique supervisé ;

dans lequel l'algorithme d'apprentissage automatique supervisé comprend une forêt aléatoire.

Fig. 1

Fig. 2a

Fig. 2b

Fig. 3

$$M_1 = \frac{1}{n}\sum_{i=1}^{n} X_i$$

140

142

144

$$M_{4/4} = \frac{1}{(n/4)}\sum_{i=3*n/4}^{n}\left(X_i - M_1 - M_{2/2}\right)$$

Fig. 4

Fig. 5

Fig. 6

Fig. 7

Receive trace — 200

↓

Pre-process the trace — 202

↓

Extract Features — 204

↓

Random Forrest — 206

Fig. 8

Receive trace — 300

↓

Pre-process the trace — 302

↓

Extract Features — 304

↓

Classify the trace — 306

↓

Generate Signal — 308

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105787511 A